# EUROPÄISCHE PATENTANMELDUNG

(11) **EP 0 872 947 A1**
(43) Veröffentlichungstag der Anmeldung: **21.10.1998**
(21) Anmeldenummer: 98890064.3
(22) Anmeldetag: 10.03.1998
(51) Int. Cl.: H02P 1/44

(54) **Verfahren und Schaltung zum Begrenzen des Einschaltstromes**

(30) Priorität: 14.04.1997 AT 635/97
(71) Anmelder: ATB Austria Antriebstechnik Aktiengesellschaft, 8724 Spielberg (Steiermark) (AT)
(72) Erfinder: Karner, Wolfgang, 8720 Apfelberg (AT); Herzl, Harald, 8740 Zeltweg (AT); Protas, Erich, Dipl.-Ing., 8700 Leoben (AT)
(74) Vertreter: Beer, Manfred, Dipl.-Ing.

(57) **Zusammenfassung**

Zur Einschaltstrombegrenzung eines an einem Einphasenwechselstromnetz betreibbaren Asynchronmotors, der eine Hauptphasenwicklung (1), eine Hilfsphasenwicklung (2) sowie einen Betriebskondensator (3) aufweist, ist die Hauptphasenwicklung (1) in zwei Teilwicklungen (1', 1") geteilt. Die Teilwicklungen (1', 1") sind in der Anlaufphase in Serie und im Betrieb parallel zueinander geschaltet. So kann die Motorimpedanz der Hauptphasenwicklung beim Anlaufen des Motors erhöht und dann wieder verkleinert werden.

## Beschreibung

Die Erfindung betrifft ein Verfahren zur Einschaltstrombegrenzung eines einphasigen Asynchronmotors mit einer Hauptphasenwicklung, einer Hilfsphasenwicklung und einem zur Hilfsphasenwicklung in Serie geschalteten Betriebskondensator und eine Schaltung, mit der das Verfahren ausgeführt werden kann.

Die Hersteller elektrischer Motoren sind zunehmend angehalten, durch Motorenanläufe hervorgerufene Netzeinbrüche, verursacht durch Stromspitzen des Motors, zu begrenzen, was auch für Asynchronmotoren zutrifft, die am Einphasenwechselstromnetz betrieben werden.

In der DE-38 20 267 A wird, um diese Forderung zu erfüllen, vorgeschlagen, der Hauptwicklung in der Anlaufphase einen Vorwiderstand vorzuschalten, um die Wicklungsspannung der Hauptwicklung in der Anlaufphase zu begrenzen. Dadurch wird zwar der Anlaufstrom wirksam begrenzt, mit dem Zuschalten des Vorwiderstandes ist allerdings auch ein Verlust an Leistungs- und Wirkungsgrad verbunden.

Um diesen Nachteil zu vermeiden, wird erfindungsgemäß ein Verfahren der eingangs genannten Gattung vorgeschlagen, das sich dadurch auszeichnet, daß man die Motorimpedanz der Hauptphasenwicklung beim Anlaufen erhöht und nach der Anlaufphase wieder verkleinert.

Eine erste Ausführungsform der Schaltung der Erfindung ist dadurch gekennzeichnet, daß die Hauptphasenwicklung aus wenigstens zwei Teilwicklungen besteht, die beim Einschalten in Serie geschaltet sind, wogegen sie im Betrieb parallel geschalten sind.

In einer alternativen Ausführungsform der Schaltung der Erfindung ist vorgesehen, daß die Hauptphasenwicklung aus wenigstens zwei parallelen Teilwicklungen besteht, von denen beim Einschalten wenigstens eine Teilwicklung weggeschaltet ist.

Bei beiden Ausführungsformen der Schaltung gemäß der Erfindung wird ebensowenig wie beim Verfahren gemäß der Erfindung die Gesamtimpedanz der Hauptphase durch einen zusätzlichen Vorschaltwiderstand erhöht, der den Wirkungsgrad verschlechtert, da ein solcher Vorschaltwiderstand entbehrlich ist. Vielmehr werden die einzelnen Teilwicklungen der Hauptphasenwicklung, z.B. beim Einschalten des Motors, in Serie und nach dem Anlaufen parallel zueinander geschaltet oder beim Einschalten wird wenigstens eine von zwei parallelen Teilwicklung weggeschaltet, wodurch die Nachteile eines Widerstandes vermieden werden.

Nachfolgend werden Ausführungsbeispiele der Erfindung mit Bezug auf die beiliegenden Zeichnungen näher erläutert. Es zeigen:
Fig. 1a und 1b eine erste Ausführungsform mit zwei seriell/parallel - umschaltbaren Teilwicklungen und
Fig. 2 eine zweite Ausführungsform mit einer wegschaltbaren Teilwicklung.

In der Zeichnung sind beispielhaft und schematisch Schaltungen eines an einem Einphasenwechselstromnetz betreibbaren Asynchronmotors dargestellt. Bei dieser Schaltung sind eine Hauptphasenwicklung 1, eine Hilfsphasenwicklung 2 und ein Betriebskondensator 3 an Netzanschlüsse L und N angeschlossen. Die Hilfsphasenwicklung 2 und der Betriebskondensator 3 sind in Serie und parallel zur Hauptphasenwicklung 1 geschaltet.

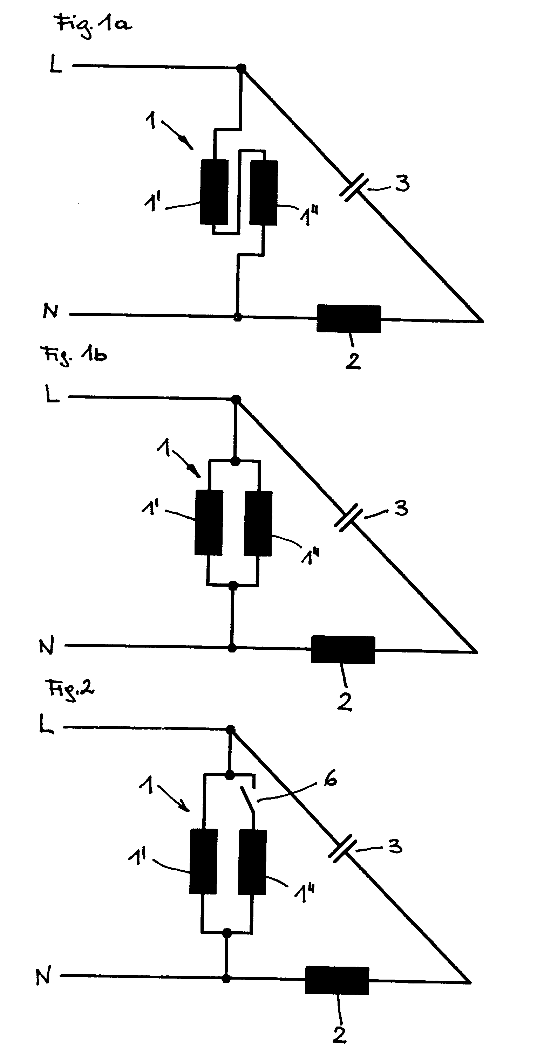

In den Fig. 1a und 1b ist eine Ausführungsform einer erfindungsgemäßen Schaltung dargestellt, bei der die Hauptphasenwicklung 1 durch zwei Teilwicklungen 1' und 1" gebildet ist. Es können auch mehr als zwei Teilwicklungen vorgesehen sein.

Wie in Fig. la dargestellt, sind die Teilwicklungen 1' und 1" in der Anlaufphase in Serie geschaltet, wobei die summierten Impedanzen der Teilwicklungen 1' und 1" praktisch die gleiche Aufgabe wie ein Vorwiderstand erfüllen. Anschließend, beim Betrieb sind die Teilwicklungen 1' und 1" parallel geschaltet, wie Fig. lb zeigt. Sind mehr als zwei Teilwicklungen 1' und 1" vorgesehen, dann können diese während des Anlaufens des Motors eine nach der anderen parallel geschaltet werden, was eine sehr gute Steuerung von Strom und Spannung während der Anlaufphase des Motors ermöglicht.

In Fig. 2 ist eine zweite Ausführungsform einer erfindungsgemäßen Schaltung dargestellt, bei der die Hauptphasenwicklung 1 wieder durch zwei Teilwicklungen 1' und 1" gebildet ist. Auch hier können mehr als zwei Teilwicklungen vorgesehen sein. In der Anlaufphase ist eine Teilwicklung 1" mit Hilfe eines Schalters 6 weggeschaltet, wie in Fig. 2 zu sehen ist.

Wenn bei der in Fig. 2 gezeigten Ausführungsform mehr als zwei Teilwicklungen vorgesehen sind, können alle Teilwicklungen bis auf die erste Teilwicklung 1' über Schalter 6 in der Anlaufphase wegschaltbar und während des Anlaufens des Motors eine nach der anderen zugeschaltet werden.

## Patentansprüche

1. Verfahren zum Begrenzen des Einschaltstromes beim Anlaufen eines einphasigen Asynchronmotors, dadurch gekennzeichnet, daß man die Motorimpedanz der Hauptphasenwicklung beim Anlaufen erhöht und nach der Anlaufphase wieder verkleinert.

2. Verfahren nach Anspruch 1, dadurch gekennzeichnet, daß man die Motorimpedanz der Hauptphasenwicklung während der Anlaufphase von einem höchsten Wert am Beginn des Anlaufen während der Anlaufphase nach und nach auf niedrigere Werte verkleinert.

3. Verfahren nach Anspruch 2, dadurch gekennzeichnet, daß man die Motorimpedanz der Hauptphasenwicklung stufenweise verkleinert.

4. Schaltung zur Einschaltstrombegrenzung eines einphasigen Asynchronmotors mit einer Hauptphasenwicklung, einer Hilfsphasenwicklung und einem zur Hilfsphasenwicklung in Serie geschalteten Betriebskondensator, gekennzeichnet durch eine Einrichtung, um die Motorimpedanz der Hauptphasenwicklung (1) während des Hochlaufes des Motors zu erhöhen.

5. Schaltung nach Anspruch 4, dadurch gekennzeichnet, daß die Hauptphasenwicklung (1) aus wenigstens zwei Teilwicklungen (1', 1") besteht, die beim Einschalten in Serie geschaltet sind, wogegen sie in Betrieb parallel geschaltet sind.

6. Schaltung nach Anspruch 4, dadurch gekennzeichnet, daß die Hauptphasenwicklung (1) aus wenigstens zwei parallelen Teilwicklungen (1', 1") besteht, von denen beim Einschalten wenigstens eine Teilwicklung (1") weggeschaltet ist.
